# EUROPÄISCHE PATENTSCHRIFT

(11) **EP 2 636 618 B1**
(45) Veröffentlichungstag und Bekanntmachung des Hinweises auf die Patenterteilung: **07.06.2017**
(21) Anmeldenummer: 13157540.9
(22) Anmeldetag: 04.03.2013
(51) Int. Cl.: B65G 37/02, B66F 9/06, G05B 19/418

(54) **Fahrerloses Transportsystem einer Fertigungs- und/oder Verpackungsanlage und Verfahren zu deren Steuerung**
Driverless transport system of a production and/or packaging plant and method for controlling the said system
Système de transport sans conducteur d'une installation de fabrication et/ou d'emballage ainsi que le procédé de commande de celui-ci

(30) Priorität: 07.03.2012 DE 102012203575
(43) Veröffentlichungstag der Anmeldung: 11.09.2013
(73) Patentinhaber: Krones Aktiengesellschaft, 93073 Neutraubling (DE)
(72) Erfinder: Perl, Kurt, 93073 Neutraubling (DE)
(74) Vertreter: Benninger, Johannes

(56) Entgegenhaltungen:
- EP-A1- 0 443 927
- EP-A1- 0 443 927
- EP-A1- 1 447 354
- EP-A2- 1 985 577
- EP-B1- 1 445 221
- DE-A1- 19 715 377
- JP-A- 2005 292 915
- US-A- 5 205 026

## Beschreibung

Die vorliegende Erfindung betrifft ein System mit einem fahrerlosen Transportsystem und einer Fertigungs- und/oder Verpackungsanlage mit den Merkmalen das Anspruchs 1 und ein Verfahren zur Steuerung eines solchen Systems mit den Merkmalen des Anspruchs 5.

Paletten mit Stückgütern, Gebinden und anderen Artikeln können auf verschiedene Weise befördert und gehandhabt werden. Eine bekannte Variante zur Beförderung der Paletten zwischen verschiedenen Bearbeitungs- und/oder Verpackungsstationen besteht in Horizontalfördereinrichtungen oder sog. Palettenrollbahnen, die jeweils Förderverbindungen zwischen den Stationen darstellen können. Solche Horizontalfördereinrichtungen oder Palettenrollbahnen können dem Transport unterschiedlicher Paletten zwischen den einzelnen Maschinen wie Palettierer, Palettenfolienwickler oder Packmaschine dienen. Dies können Leerpaletten, Vollpaletten, Zwischenlagenpaletten oder auch Paletten mit Packmitteln wie z.B. Folienrollen oder Kartonstapel sein. Darüber hinaus sind fahrerlose Transportsysteme bekannt, bei denen die Paletten mittels einer Mehrzahl von jeweils unabhängig bewegbaren Fahrzeugen zwischen den Maschinenstationen transportiert werden. Diese Fahrzeuge weisen in der Regel Hubgabeleinrichtungen auf, so dass sie in der Lage sind, Paletten vor oder nach der zu versorgenden Maschine aufgeben oder abnehmen.

Aus der EP 1 445 221 B1 ist eine Vorrichtung und ein Verfahren zum Wechseln von Paletten in einer automatischen Palettiervorrichtung bekannt. Ein verfahrbarer Transferwagen, dem eine Antriebseinrichtung zugeordnet ist, kann in einem ersten Palettenbereich eine erste Palette und in einem zweiten Palettenbereich eine zweite Palette aufnehmen. Der Transferwagen kann gegenüber einer ortsfesten Palette bewegt werden, um deren Position auf dem Transferwagen variieren zu können.

Die EP 1 860 044 B1 beschreibt eine weitere Vorrichtung zum Handhaben von Paletten, die eine Transportvorrichtung mit einem angetriebenen, automatisch gesteuerten Wagen umfasst. Innerhalb einer Palettierzelle wird der Transportwagen in einer Führungsvorrichtung in Form von Führungsschienen oder einer Führungsnut im Boden geführt. Die Führungsvorrichtung verfügt über eine Zentriervorrichtung, mit der Spurfehler der Transporteinrichtung, die bei Fahrten außerhalb der Palettierzelle auftreten können, beim Zurückfahren der Transporteinrichtung in die Palettierzelle ausgeglichen werden können.

Die DE 197 15 377 A1 zeigt ein Flurförderfahrzeug für ein fahrerloses Transportsystem, welches zwei übereinanderliegende Positionen für Transportbehälter aufweist. Das Fahrzeug verfügt über zwei Übergabevorrichtungen zur Übergabe eines Transportbehälters an eine externe Station, von welchen die für die untere Position verantwortliche ausschließlich horizontal beweglich ausgebildet ist, während die für die obere Position zuständige, bspw. in Form eines Hubmasten ausgeführte, zusätzlich eine vertikale Übergabemöglichkeit zulässt, mit welcher auch der Austausch eines Behälters zwischen den beiden Transportpositionen des Fahrzeugs ermöglicht wird.

Die JP 2005 292915 A offenbart ein automatisch geführtes Transportfahrzeug, auf welchem zwei, in Fahrtrichtung hintereinander befindliche, drehbar gelagerte Positionen zur Aufnahme von jeweils zwei übereinander befestigten, palettenartigen Transportflächen angeordnet sind, deren Länge die Fahrzeugbreite übersteigt und deren Neigungswinkel veränderbar ist. In Be- und/oder Entladeposition werden die Transportflächen um 90° quer zur Fahrtrichtung rotiert und stellen der Be- und/oder Entladestation ihre volle Länge zur Aufnahme von Gütern zur Verfügung. Zusätzlich ermöglicht es der verstellbare Neigungswinkel, Güter beim Beladen aus Richtung der Beladestation auf die Transportfläche, beim Entladen von der Transportfläche in Richtung der Entladestation gleiten zu lassen. Während des Transports sind die Transportflächen längs zur Fahrtrichtung ausgerichtet und ermöglichen somit den Einsatz der Fahrzeugs in Gassen, deren Breite die Fahrzeugbreite nur wenig übersteigen.

Die US 5 205 026 A beschreibt eine Fertigungsanlage zur Montage von Bauteilen, welche aus mehreren Einzelkomponenten bestehen, die an separaten Bearbeitungsstationen montiert bzw. bearbeitet werden, welche an parallel zueinander verlaufenden Förderwegen angeordnet sind. Die Bauteile befinden sich dabei auf verfahrbaren Transportplattformen, welche entlang der parallelen Förderwege den einzelnen Bearbeitungsstationen zugeführt werden, wobei der Wechsel der Transportplattformen zwischen den parallelen Förderwegen über zu diesen rechtwinklig angeordneten Zuführwegen mithilfe von an den entsprechenden Knotenpunkten befindlichen, drehbar ausgebildeten Stationen stattfindet.

Die fahrerlosen Transportsysteme mit ihren unabhängig voneinander bewegbaren Transportwagen können gegenüber herkömmlichen stationären Transporteinrichtungen wie Palettenrollbahnen Flexibilitätsvorteile aufweisen, da die einzelnen Transporteinheiten flexibel einsetz- und steuerbar sind. Zudem sind sie allseitig zugänglich und damit besser zu warten und ggf. auszutauschen. Zudem können die Investitionskosten bei der Installation einer Anlage niedriger ausfallen, sofern die Transportmöglichkeiten voll ausgeschöpft und ein möglichst großer Anteil an stationären Transporteinrichtungen eingespart werden. Dies ist besonders dann zu realisieren, wenn die zu verbindenden Anlagenteile einerseits relativ weit voneinander entfernt sind und andererseits in ihrer Position veränderbar bleiben sollen, bspw. nach einer Modifikation und/oder Umrüstung der Anlage.

Ein Ziel der vorliegenden Erfindung besteht darin, ein möglichst flexibel steuer- und einsetzbares System mit einer Fertigungs- und/oder Verpackungsanlage und einem fahrerlosen Transportsystem mit einer Mehrzahl von Transportfahrzeugen zur Verfügung zu stellen, die dem Transport von Lasteinheiten zwischen mehreren Verarbeitungsstationen dienen. Die Lasteinheiten sollen mit einem minimalen Rangier- und/oder Umsetzaufwand der Transportfahrzeuge in möglichst geringer Zeit und mit möglichst kurzen Wegen transportiert werden.

Das genannte Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels schlägt die vorliegende Erfindung ein System mit einem fahrerlosen Transportsystem und einer Fertigungs- und/oder Verpackungsanlage mit den Merkmalen des unabhängigen Anspruchs 1 vor. Die Verpackungsanlage weist mehrere Verarbeitungsstationen auf, die jeweils mit Überladebereichen ausgestattet sind, um Lasten jeweils definierter Größe wie insbesondere Paletten auf Transportfahrzeuge umladen oder von diesen abladen zu können. Die fahrerlosen Transportfahrzeuge dienen der Bewegung der Lasten zwischen voneinander entfernten Verarbeitungsstationen der Anlage und können jeweils eine, zwei oder mehr solcher definierten Lasten gleichzeitig bewegen und zwischen den Verarbeitungsstationen befördern. Bei den Lasten handelt es sich bspw. um Leerpaletten oder mit unterschiedlichen Gütern beladene Paletten oder andere Verpackungseinheiten jeweils definierter Größe. Die definierte Größe bezieht sich sowohl auf die Grundfläche, die Höhe, das Volumen wie auch das Gewicht dieser Verpackungseinheiten bzw. Paletten. Jedes dieser fahrerlosen Transportfahrzeuge weist jeweils wenigstens zwei definierte Auflagebereiche für die Lasten auf. Gemäß der vorliegenden Erfindung sind diese wenigstens zwei definierten Auflagebereiche jedes Transportfahrzeuges in Bezug auf die Überladebereiche jeder Bearbeitungsstation variabel, was insbesondere eine Austauschbarkeit der Lasten zwischen den wenigstens zwei definierten Auflagebereichen bedeutet. So kann bspw. eine in einem ersten Auflagebereich des Transportfahrzeuges befindliche Last in den zweiten Auflagebereich überführt werden, um den ersten Auflagebereich für die Übernahme einer weiteren Last vorzubereiten und freizumachen. Diese Überführung kann wahlweise während der Fahrt des Fahrzeugs oder bei dessen Stillstand erfolgen. Zur Umsetzung der Lasten können die Transportfahrzeuge wahlweise eigene Handhabungselemente aufweisen. Die Handhabungselemente zur Umsetzung der Lasten können jedoch wahlweise auch den Überladebereichen der Verarbeitungsstation zugeordnet sein, so dass die Umladung der Lasten vom ersten Auflagebereich in den zweiten Auflagebereich oder umgekehrt nach dem Heranfahren des Transportfahrzeuges an die Verarbeitungsstation durch die stationären Handhabungselemente dieser Station erfolgen kann.

Die erfindungsgemäße Ausführungsvariante sieht vor, dass der Wechsel der Positionen der Lasten der Transportfahrzeuge durch Wenden des jeweiligen Fahrzeugs um 180 Grad erfolgt. So nimmt ein Transportfahrzeug nach seiner Positionierung am Überladebereich einer Verarbeitungsstation bspw. eine Last auf einem seiner Auflagebereiche auf, wendet anschließend um 180 Grad, um seinen zweiten Auflagebereich an den Überladebereich heranzufahren, und nimmt dort eine weitere Last auf was bspw. auch eine Leerpalette sein kann. Mit diesen beiden Lasten fährt das Transportfahrzeug anschließend zu einer weiteren Verarbeitungsstation der Anlage, wo eine der beiden Lasten oder auch beide Lasten nacheinander am Überladebereich übernommen und vom Transportfahrzeug abgeladen werden können.

Die Fahrzeuge selbst weisen zweckmäßigerweise geeignete Steuerungs- und Lenkungselemente auf, so dass sie autonom und in Abstimmung mit dem jeweils benötigten Materialfluss zwischen den verschiedenen Verarbeitungsstationen fahren können. Die Steuerung kann wahlweise funkgesteuert oder optisch erfolgen, wobei die Fahrwege entweder in gewissen Grenzen frei oder zumindest abschnittsweise durch geeignete Führungselemente, Gleissysteme etc. vorgegeben sein können. Die Führungselemente oder Gleissysteme können bspw. durch induktive Führungselemente gebildet sein. Zumindest im Bereich der Verarbeitungsstationen und deren Überladebereiche können die Fahrwege nicht frei gewählt werden, da es sonst zu Kollisionen oder ungenauen Überladungen kommen kann. Zudem muss das erfindungsgemäße System über geeignete Maßnahmen zur Kollisionsvermeidung zwischen mehreren Transportfahrzeugen verfügen.

Wahlweise können einzelne oder alle Fahrzeuge auch drei oder mehr Auflagebereiche für definierte Lasten aufweisen. Aufgrund der variablen Auflagebereiche und durch die Wechselbarkeit der Positionen für die Lasten können die Transportfahrzeuge bei jeder Fahrt gleichzeitig mehrere Transportaufgaben ausführen.

Die Lasten können insbesondere durch Paletten gebildet sein, die zwischen den verschiedenen Verarbeitungsstationen ausgetauscht werden. Um die Ladeaufgaben erfüllen zu können, weist jede Station vorzugsweise eine Palettenaufnahme- und Hubstation auf, was im vorliegenden Zusammenhang als Überladebereich bezeichnet wird. Auf diese Weise kann jedes Fahrzeug an jeder Station umgeladen werden und dabei je nach Ausführungsvariante des Systems ggf. ein Stück fahren, um die Auflagebereiche umzusetzen.

Nachfolgend werden nochmals einige Details der Funktionsweise und des typischen Einsatzes eines fahrerlosen Transportsystems in Verarbeitungs- und/oder Verpackungsanlagen beschrieben, die bspw. Palettiermaschinen, Packmaschinen, Palettenwickler etc. umfassen kann. So hat sich als ein wesentlicher Faktor für die leistungsgerechte Funktion einer Palettiermaschine oder eines Palettenwicklers ein möglichst schnell durchzuführender Palettenwechsel herausgestellt, bspw. durch Austausch einer Leerpalette und Vollpalette am Palettierer oder durch die Zuführung einer Palette mit noch nicht umwickelter Beladung sowie die Abführung einer Palette mit bereits umwickelter Ladung an einer Paletten-Folienwickelmaschine. Die Besonderheit der vorliegenden Erfindung besteht im weitgehenden Verzicht auf stationäre Palettenfördersegmente im Bereich der oben genannten Maschine oder Verpackungs- und/oder Verarbeitungsanlage. Stattdessen werden fahrerlose Transportsysteme für den Transport von Paletten zwischen den Maschinen bzw. Stationen eingesetzt, aber auch für den Palettenwechsel in den Maschinen oder Anlagenteilen. Ein wesentlicher Aspekt ist in diesem Zusammenhang die Ausstattung jedes Transportfahrzeuges des fahrerlosen Transportsystems mit wenigstens zwei Palettenstellplätzen. Wenn somit ein solches Transportfahrzeug bspw. am Palettierer ankommt, ist das Fahrzeug mit einer Leerpalette an seinem in Laufrichtung hinteren Stellplatz bestückt. Beim Einfahren in den Palettierer stoppt das Transportfahrzeug mit dem vorderen leeren Stellplatz am Beladeplatz des Palettierers und übernimmt die palettierte Vollpalette durch Einsatz einer Palettenhub- und/oder -halteeinrichtung, welche die Paletten zuvor gehalten hat. Die Halteeinrichtung mit ihren seitlichen Trägerelementen, die linear oder schwenkbar unter die Palettenbretter eingefahren werden können, ist normalerweise stationär ausgeführt. Die Hubeinrichtung kann in der Halteeinrichtung oder wahlweise im Transportfahrzeug integriert sein.

Nachdem an einer der Verarbeitungsstationen die Vollpalette vom Transportfahrzeug übernommen wurde, fährt das fahrerlose Fahrzeug im Durchlauf solange weiter, bis die neue Leerpalette in Beladeposition ist und von der Haltevorrichtung übernommen wird. Anschließend startet der Palettiervorgang erneut und das Transportfahrzeug kann mit der Vollpalette zur Wickelstation fahren, wo die Vollpalette in horizontaler Richtung mit einer stretch- und/oder schrumpfbaren Folie umwickelt werden kann. An dieser Palettenwickelstation muss die neue ungewickelte Vollpalette wieder in Fahrtrichtung hinten auf dem Transportfahrzeug stehen. Aus diesem Grund muss mit einer Wechseleinrichtung zwischen dem Palettierer und dem Wickler die Palette von vorne nach hinten auf dem Transportfahrzeug umgesetzt werden. Dies kann einerseits durch eine Halte- und Hubvorrichtung erfolgen, wobei das Transportfahrzeug unter der Haltevorichtung hindurch fährt und dann die Palette wieder übernimmt. Wahlweise kann dieser Positionswechsel auch durch einen Fahrtrichtungswendevorgang des Transportfahrzeugs in einer Stichbahn oder durch Drehen auf der Stelle um 180° erfolgen. Anschließend kann das Transportfahrzeug zum Palettenwickler fahren. Der Palettenwechselvorgang durch das Transportfahrzeug erfolgt hier wie beim Palettierer.

Ein solches System kann in vorteilhafter Weise im Endverpackungsbereich von Getränke- und Lebensmittelproduktionsanlagen eingesetzt werden. Das erfindungsgemäße System weist mehrere Vorteile auf, da bspw. keine Palettenförderelemente in den Verpackungs- und Palettiermaschinen bzw. Palettenwickelmaschinen mehr erforderlich sind. Die gesamte Produktionsanlage kann sehr flexibel und mit einem hohen Maß an Freiheitsgraden geplant werden, ohne dass Transportelemente die Wege zwischen den Verarbeitungsstationen versperren und der gesamten Anlagenaufstellung die gewünschte Flexibilität nehmen. Alle Verarbeitungsstationen und die Produktionsmaschinen bleiben gut zugänglich. Darüber hinaus ermöglicht der Verzicht auf die kostenintensiven Transportelemente Kostenvorteile. Es besteht außerdem die Möglichkeit der Maschinenbeschickung ohne manuelle Bedienereingriffe.

Die vorliegende Erfindung betrifft weiterhin ein Verfahren zur Steuerung eines Systems mit einem fahrerlosen Transportsystem und einer Fertigungs- und/oder Verpackungsanlage, die mehrere Verarbeitungsstationen mit Überladebereichen aufweist, zwischen denen Lasten jeweils definierter Größe wie Paletten o. dgl. mittels fahrerlosen Transportfahrzeugen befördert werden, die jeweils wenigstens zwei definierte Auflagebereiche für die Lasten aufweisen. Bei dem Verfahren können die Lasten zwischen den wenigstens zwei definierten Auflagebereichen jedes Transportfahrzeuges ausgetauscht und/oder in ihren Positionen gewechselt werden. So kann bspw. eine in einem ersten Auflagebereich des Transportfahrzeuges befindliche Last während der Fahrt des Fahrzeugs oder bei dessen Stillstand in den zweiten Auflagebereich überführt werden. Wenn in diesem Zusammenhang von ersten und zweiten Auflagebereichen die Rede ist, so nehmen deren Positionen in erster Linie Bezug auf die Bewegungsrichtung des Transportfahrzeuges. So können die Lasten von einer in Fahrtrichtung vorderen Position auf die hintere Position des Fahrzeuges verschoben oder umgesetzt werden. Gleiches kann erreicht werden, indem das Transportfahrzeug nach der Übernahme einer Last auf einem der Auflagebereiche gewendet wird. Auf diese Weise können die Positionen der Lasten durch Wenden des Transportfahrzeugs um 180° zwischen den Auflagebereichen gewechselt werden, so dass eine zuvor in Fahrtrichtung vorne befindliche Last nach dem Wenden auf dem hinteren Auflagebereich transportiert wird, oder umgekehrt.

Eine Variante des Verfahrens sieht vor, dass ein Transportfahrzeug bei einer Fahrt gleichzeitig mehrere Transportaufgaben durch variable Auflagebereiche und wechselbare Positionen für jede der darauf abgelegten Lasten wahrnehmen kann. So können die Lasten umgesetzt und ein frei gewordener Auflagebereich für die Übernahme einer weiteren Last vorbereitet werden, so dass bei einer Fahrt mehrere Transportaufgaben übernommen werden können. Die Umsetzung der Lasten kann wahlweise bei stehendem Fahrzeug an einer der Verarbeitungsstationen erfolgen, die bspw. die hierfür erforderlichen Handhabungselemente aufweisen kann. Alternativ oder zusätzlich können die Handhabungselemente auch den Fahrzeugen selbst zugeordnet sein, so dass die Lasten bei deren Stillstand oder auch bei einer Bewegungsfahrt zwischen den Verarbeitungsstationen zwischen den Auflagebereichen verschoben oder umgesetzt werden können.

Das fahrerlose Transportfahrzeug eines Transportsystems gemäß einer der zuvor beschriebenen Ausführungsvarianten weist wenigstens zwei Auflagebereiche zur Aufnahme und zum Transport von Lasten jeweils definierter Größe wie Paletten o. dgl. auf, wobei die wenigstens zwei Auflagebereiche variabel mit Lasten belegbar und/oder die Lasten zwischen den wenigstens zwei Auflagebereichen austauschbar sind. Wahlweise können dem Transportfahrzeug Handhabungselemente zur Umsetzung der Lasten zwischen den wenigstens zwei Auflagebereichen zugeordnet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Draufsicht auf eine Ausführungsvariante des Systems aus einer Fertigungs- und/oder Verpackungsanlage mit einem fahrerlosen Transportsystem.
Fig. 2 zeigt eine schematische Perspektivansicht der Anlage gemäß Fig. 1.
Fig. 3 zeigt eine weitere schematische Perspektivansicht der Anlage gemäß Fig. 1.

Für gleiche oder gleich wirkende Elemente der Erfindung werden jeweils gleiche Bezugszeichen verwendet. Teilweise werden im Interesse einer besseren Übersichtlichkeit in den einzelnen Figuren nur solche Bezugszeichen verwendet, die für die Beschreibung der jeweiligen Figur erforderlich sind. Die dargestellten Ausführungsformen stellen lediglich Beispiele dar, wie Vorrichtung oder Verfahren des erfindungsgemäßen Systems ausgestaltet sein können und stellen keine abschließende Begrenzung dar.

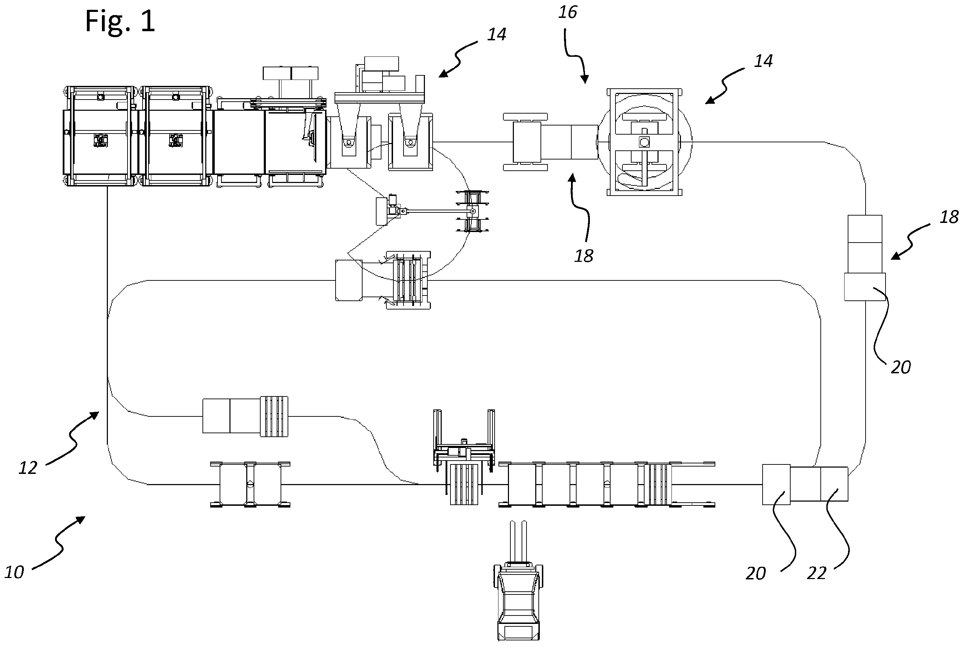

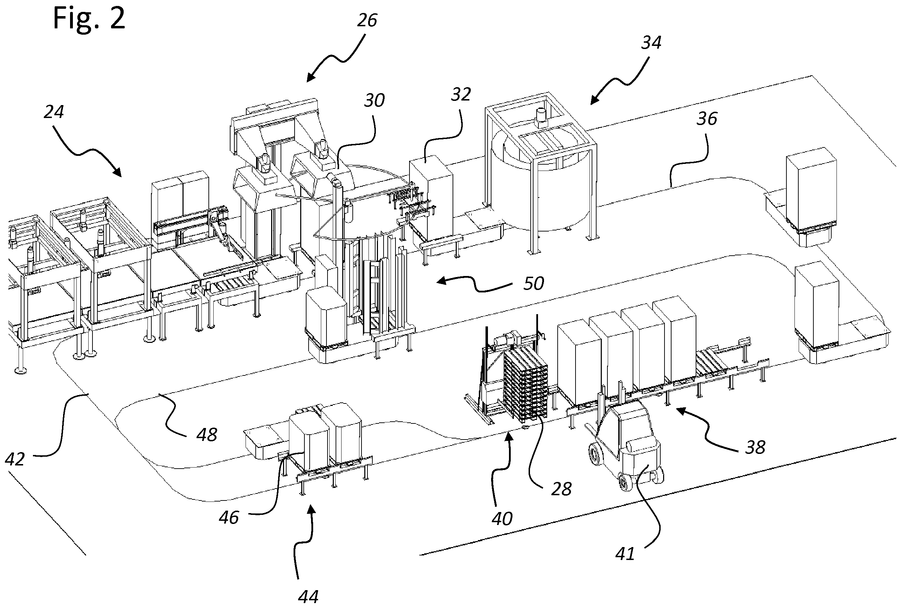

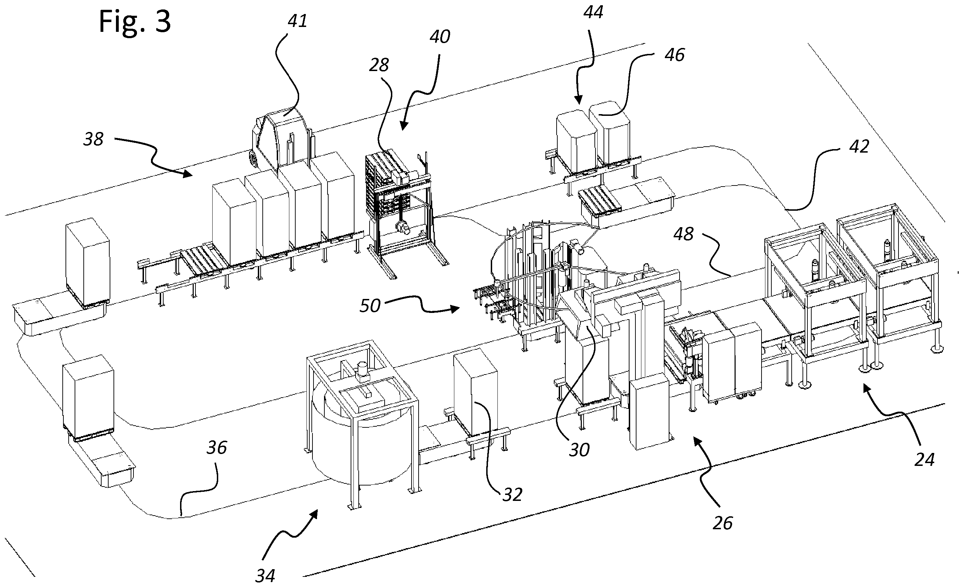

Die schematischen Darstellungen der Figuren 1 bis 3 zeigen verschiedene Ansichten einer Ausführungsvariante des erfindungsgemäßen Systems. Die Anlage 10 weist eine Reihe von jeweils entfernt voneinander aufgestellten Verarbeitungsstationen 14 auf, die jeweils mit Überladebereichen 16 ausgestattet sind. Zwischen den Verarbeitungsstationen 14 mit ihren Überladebereichen 16 werden mittels einer Mehrzahl von einzelnen Transportfahrzeugen 18 einzelne Lasten 20 jeweils definierter Größe befördert. Jedes dieser Transportfahrzeuge 18 weist jeweils wenigstens zwei definierte Auflagebereiche 22 für die Lasten 20 auf, wobei die definierten Auflagebereiche 22 jedes Transportfahrzeuges 18 variabel mit den Lasten 20 belegbar sind. Die beispielhaft dargestellten Transportfahrzeuge 18 weisen einen relativ flachen Korpus auf und können bspw. über elektrische Antriebe und vorne und/oder hinten lenkbare Räder verfügen. Derartige Transportfahrzeuge 18 sind aus dem Stand der Technik bekannt und brauchen deshalb hier nicht näher erläutert werden.

Die in den Figuren 1 bis 3 dargestellte Fertigungs- und/oder Verpackungsanlage 10 umfasst im gezeigten Ausführungsbeispiel einen Lagenbildungsabschnitt 24, in dem Packgüter wie bspw. Gebinde mit Getränkebehältern oder andere Packgüter zu palettierfähigen Lagen zusammengestellt werden, um von diesem Lagenbildungsabschnitt 24 zu einem Palettierbereich 26 übergeben zu werden, wo mehrere Lagen der Packgüter übereinander auf bereit stehende Leerpaletten 28 gestapelt werden können, was im gezeigten Ausführungsbeispiel mit sog. Jalousiegreiferköpfen 30 erfolgt. Die Leerpaletten 28 stehen jeweils auf den Auflagebereichen 22 eines bereit stehenden Transportfahrzeugs 18 bzw. zweier nebeneinander stehender Transportfahrzeuge 18, die anschließend mit den fertig konfektionierten Paletten 32 zu weiteren Verarbeitungsstationen 14 gefahren werden. Eine solche Verarbeitungsstation 14 kann eine dem Palettierbereich 26 nachgeordnete und in geringem Abstand zu diesem stehende Wickelstation 34 sein, in der die zuvor konfektionierte Palette 32 mit einer geeigneten Schrumpf- und/oder Stretchfolie oder einem anderen geeigneten Verpackungsmaterial umwickelt werden kann, so dass eine transportable und versandfertige Paletteneinheit 32 entsteht.

Der weitere Transport der Paletten 32 erfolgt mittels weiterer Transportfahrzeuge 18, die einen vorgegebenen Fahrweg 36 verfolgen und die gepackten Paletten 32 zu einem Speicherbereich 38 bringen, wo sie in Reihe abgelegt zwischengespeichert und von dort mit weiteren Handhabungseinrichtungen übernommen werden können. Im gezeigten Ausführungsbeispiel werden sie vom Speicherbereich 38 mit einem Flurförderfahrzeug, einem sog. Gabelstapler 41 aufgenommen und zu nachfolgenden Handhabungs- und/oder Transportstationen (nicht dargestellt) überführt.

Neben dem Speicherbereich 38 befindet sich ein Stapelbereich 40 für die Leerpaletten 28, die ebenfalls mit den Transportfahrzeugen je nach Bedarf zum Palettierbereich 26 befördert werden, vorzugsweise auf entsprechenden Fahrwegen 42, die teilweise unterhalb des Lagenbildungsabschnittes 24 verlaufen können, da die Transportfahrzeuge 18 kompakt genug gebaut sind. In Nähe des Stapelbereichs 40 für die Leerpaletten 28 befindet sich zudem ein weiterer Stapelplatz 44 für aufeinander gestapelte Zwischenlagen 46, die ebenfalls auf Leerpaletten 28 stehen können und vom Stapelplatz 44 über einen dritten Fahrwegabschnitt 48 zu einem Zwischenlagengreifer 50 befördert werden können, von wo aus die einzelnen Zwischenlagen 46 dem Palettierbereich 26 während des Stapelns der einzelnen Lagen zur Verfügung gestellt werden.

Die gezeigten Fahrwege 36, 42 und 48 müssen nicht zwingend fest vorgegeben sein, bspw. durch Gleise im Boden oder andere geeignete Führungselemente. Grundsätzlich ist es möglich, die Transportfahrzeuge 18 innerhalb gewisser Grenzen frei zwischen den verschiedenen Verarbeitungsstationen 14 fahren zu lassen. Es muss lediglich sichergestellt sein, dass die Transportfahrzeuge 18 in exakt definierten Positionen an den jeweiligen Verarbeitungsstationen 14 andocken bzw. angenähert sind, um die Übergabe der Paletten 32 störungsfrei ablaufen zu lassen. Die Überladebereiche 16 der Verarbeitungsstationen 14 können wahlweise mit den Transportfahrzeugen 18 gekoppelt sein, so dass diese die Lasten 20 entweder autonom oder in Kooperation mit entsprechenden Handhabungselementen der Verarbeitungsstationen 14 übernehmen und/oder übergeben können.

Wie es die Figuren 1 bis 3 erkennen lassen, sind die Transportfahrzeuge 18 jeweils mit zwei voneinander beabstandeten Auflagebereichen 22 für die Lasten 20 bzw. die Paletten 32 ausgestattet, die sich jeweils vorne und hinten am Fahrzeug 18 befinden. Diese beiden Auflagebereiche 22 sind erfindungsgemäß variabel mit den Lasten 20 belegbar, was bspw. bedeutet, dass eine in einem ersten Auflagebereich 22 des Transportfahrzeuges 18 befindliche Last 20 in den zweiten Auflagebereich 22 überführbar ist. Um dies zu ermöglichen, können bspw. jedem Transportfahrzeug 18 jeweils hier nicht dargestellte Handhabungselemente zur Umsetzung der Lasten 20 zwischen den wenigstens zwei Auflagebereichen 22 zugeordnet sein. Diese Umsetzung der Lasten 20 kann wahlweise während der Fahrt des Fahrzeugs 18 entlang der Fahrwege 36, 42 und/oder 48 oder bei dessen Stillstand erfolgen. Die erfindungsgemäße, hier nicht gezeigte Variante sieht vor, dass die Positionen der Lasten 20 zwischen den Auflagebereichen 22 durch Wenden der Transportfahrzeuge 18 um 180° getauscht werden. Auf diese Weise kann ein Transportfahrzeug 18 bei einer Fahrt gleichzeitig mehrere Transportaufgaben durch die variabel nutzbaren Auflagebereiche 22 und die wechselbaren Positionen für jede der darauf abgelegten Lasten 20 wahrnehmen.

Das sinnvolle Umsetzen der Lasten 20 bzw. Paletten 32 zwischen den verschiedenen Verarbeitungsstationen 14 sei an einem Beispiel erläutert. Wenn ein Transportfahrzeug 18 am Palettierbereich 26 mit zwei konfektionierten Paletten 32 bestückt ist, die auf den vorderen und hinteren Auflagebereichen 22 des Fahrzeuges 18 stehen, so erfolgt in der nächsten Verarbeitungsstation 14, der Wickelstation 34, die Umwicklung einer der beiden Paletten 32, normalerweise der in Fahrtrichtung frontseitig stehenden Palette 32 mit Folie oder Verpackungsmaterial. Da das zwischen dem Palettierbereich 26 und der Wickelstation 34 befindliche Transportfahrzeug 18 nun nur noch eine Palette 32 auf seinem hinteren Auflagebereich 22 trägt, muss diese Palette 32 für die weitere Übergabe an die Wickelstation 34 in die frontseitige Position gebracht werden. Dies kann entweder durch Wenden des Transportfahrzeuges 18 um 180° oder durch Umsetzen der Palette 32 von hinten nach vorne erfolgen. Da aufgrund der beschränkten Platzverhältnisse das Wenden problematisch sein kann, ist hier dem Umsetzen der Palette 32 durch geradlinige Bewegung parallel zur Längserstreckungsrichtung des Transportfahrzeuges 18 der Vorzug zu geben. Zu diesem Zweck können entweder am Transportfahrzeug 18 oder entlang des Fahrweges geeignete Handhabungs- und/oder Umsetzelemente angeordnet sein.

Ein ähnliches Problem besteht anschließend, auf dem Weg 36 zwischen der Wickelstation 34 und dem Speicherbereich 38, da die von der Wickelstation 34 übernommenen Paletten 32 normalerweise in Fahrtrichtung hinten auf dem Transportfahrzeug 18 aufgeladen werden, während die Übergabe zum Speicherbereich 38 von der frontseitigen Position bzw. vom frontseitigen Auflagebereich 22 erfolgen muss. Aus diesem Grund werden die Paletten 32 entlang des Fahrweges 36 entweder vom hinteren auf den vorderen Auflagebereich 22 verschoben oder das Fahrzeug 18 muss entlang des Fahrweges 36 um 180° gewendet werden. Da in diesem Bereich zwischen der Wickelstation 34 und dem Speicherbereich 38 mehr Raum zur Verfügung steht, können die Transportfahrzeuge 18 hier problemlos wenden.

Die Figuren 1 bis 3 lassen deutlich erkennen, dass für die Verbindungswege zwischen den einzelnen Verarbeitungsstationen 14 völlig auf Horizontalfördereinrichtungen aller Art verzichtet werden kann. Stattdessen können alle Transportaufgaben mit den fahrerlosen Transportfahrzeugen 18 erledigt werden, die auf den Fahrwegen 36, 42 und 48 mit jeweils einer Last 20 oder zwei Lasten 20 oder auch leer hin und herfahren. Die Anlagenkonfiguration kann selbstverständlich in vielfältiger Weise von der gezeigten Konfiguration abweichen, da diese lediglich als stark vereinfachtes Beispiel dienen soll, die das erfindungsgemäße Prinzip veranschaulichen soll.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Fertigungs- und/oder Verpackungsanlage
- 12: Fahrerloses Transportsystem
- 14: Verarbeitungsstation, Bearbeitungsstation
- 16: Überladebereich
- 18: Transportfahrzeug
- 20: Last
- 22: Auflagebereich
- 24: Lagenbildungsabschnitt
- 26: Palettierbereich
- 28: Leerpaletten
- 30: Jalousiegreiferkopf
- 32: Palette
- 34: Wickelstation
- 36: Fahrweg
- 38: Speicherbereich
- 40: Stapelbereich
- 41: Gabelstapler
- 42: Weiterer Fahrweg
- 44: Weiterer Stapelplatz
- 46: Zwischenlagen
- 48: Dritter Fahrwegabschnitt
- 50: Zwischenlagengreifer

## Patentansprüche

1. System mit einem fahrerlosen Transportsystem (12), das fahrerloseTransportfahrzeuge (18) umfasst und mit einer Fertigungs- und/oder
Verpackungsanlage (10), die mehrere Verarbeitungsstationen (14) mit Überladebereichen (16) aufweist, wobei das System so konfiguriert ist, dass zwischen den Überladebereichen (16) Lasten (20) jeweils definierter Größe wie Paletten (32) o. dgl. mittels Transportfahrzeugen (18) befördert werden, die jeweils wenigstens zwei definierte Auflagebereiche (22) für die Lasten (20) aufweisen, **dadurch gekennzeichnet, dass** das System so konfiguriert ist, dass ein Wechsel der zwei definierten Auflagebereiche (22) der Transportfahrzeuge (18) an einem Überladebereich (16) durch Wenden des jeweiligen Fahrzeugs (18) um 180 Grad erfolgt, wobei ein Transportfahrzeug (18) nach seiner Positionierung an einem der Überladebereiche (16) einer Verarbeitungsstation (14) eine Last (20) auf seinem ersten Auflagebereich (22) aufnimmt, anschließend um 180 Grad wendet, seinen zweiten Auflagebereich (22) an den Überladebereich (16) heranfährt, und dann auf dem zweiten Auflagebereich (22) eine weitere Last (20) aufnimmt.

2. System nach Anspruch 1, bei dem eine in einem ersten Auflagebereich (22) des Transportfahrzeuges (18) befindliche Last (20) in den zweiten Auflagebereich (22) überführbar ist.

3. System nach Anspruch 1 oder 2, bei dem jedem Transportfahrzeug (18) jeweils Handhabungselemente zur Umsetzung der Lasten (20) zwischen den wenigstens zwei Auflagebereichen (22) zugeordnet sind.

4. System nach einem der Ansprüche 1 bis 3, bei dem jede Verarbeitungsstation (14) jeweils wenigstens eine Palettenaufnahme- und Hubstation aufweist, die den Überladebereich (16) bilden.

5. Verfahren zur Steuerung eines Systems mit einer Fertigungs- und/oder Verpackungsanlage (10), die mehrere Verarbeitungsstationen (14) mit Überladebereichen (16) aufweist, und einem fahrerlosen Transportsystem mit fahrerlosen Transportfahrzeugen (18), wobei die fahrerlosen Transportfahrzeuge (18) derart angesteuert werden, dass Lasten (20) jeweils definierter Größe wie Paletten (32) o. dgl. mittels der fahrerlosen Transportfahrzeuge (18) befördert werden, und wobei die fahrerlosen Transportfahrzeuge (18) jeweils wenigstens zwei definierte Auflagebereiche (22) für die Lasten (20) aufweisen, **dadurch gekennzeichnet, dass** das System so angesteuert wird, dass ein Wechsel der zwei definierten Auflagebereiche (22) der Transportfahrzeuge (18) an einem Überladebereich (16) durch Wenden des jeweiligen Fahrzeugs (18) um 180 Grad erfolgt, wobei ein Transportfahrzeug (18) nach seiner Positionierung an einem der Überladebereiche (16) einer Verarbeitungsstation (14) eine Last (20) auf seinem ersten Auflagebereich (22) aufnimmt, anschließend so angesteuert wird, dass es um 180 Grad wendet, seinen zweiten Auflagebereich (22) an den Überladebereich (16) heranfährt und dann auf den zweiten Auflagebereich (22) eine weitere Last (20) aufnimmt.

6. Verfahren nach Anspruch 5, bei dem eine in einem ersten Auflagebereich (22) des Transportfahrzeuges (18) befindliche Last (20) während der Fahrt des Fahrzeugs (18) oder bei dessen Stillstand in den zweiten Auflagebereich (22) überführt wird.

7. Verfahren nach einem der Ansprüche 5 oder 6, bei dem ein Transportfahrzeug (18) bei einer Fahrt gleichzeitig mehrere Transportaufgaben wahrnimmt.

## Claims

1. A system with a driverless transport system (12), which comprises driverless transport vehicles (18), and with a production facility and/or packaging facility (10), which has a plurality of processing stations (14) with transfer areas (16), wherein the system is configured such that loads (20) of, in each case, a specified size, such as pallets (32) or the like, are conveyed between the transfer areas (16) by means of transport vehicles (18), which each have at least two specified support areas (22) for the loads (20), **characterised in that** the system is configured such that a switchover between the two specified support areas (22) of the transport vehicles (18) at a transfer area (16) is carried out by turning the particular vehicle (18) around by 180 degrees, wherein a transport vehicle (18), after its positioning at one of the transfer areas (16) of a processing station (14), picks up a load (20) onto its first support area (22), subsequently turns around by 180 degrees, drives up to the transfer area (16) with its second support area (22), and then picks up a further load (20) onto the second support area (22).

2. The system as recited in claim 1, in which a load (20) that is located in a first support area (22) of the transport vehicle (18) is transferable into the second support area (22).

3. The system as recited in claim 1 or 2, in which each transport vehicle (18) is associated with handling members for transposing the loads (20) between the at least two support areas (22).

4. The system as recited in one of the claims 1 to 3, in which each processing station (14) has at least one station for pallet pick-up and lifting, which station forms the transfer area (16).

5. A method for the control of a system with a production facility and/or packaging facility (10), which has a plurality of processing stations (14) with transfer areas (16), and with a driverless transport system with driverless transport vehicles (18), wherein the driverless transport vehicles (18) are controlled in such a manner that loads (20) of, in each case, a specified size, such as pallets (32) or the like, are conveyed by means of the driverless transport vehicles (18), and wherein the driverless transport vehicles (18) each have at least two specified support areas (22) for the loads (20), **characterised in that** the system is controlled such that a switchover between the two specified support areas (22) of the transport vehicles (18) at a transfer area (16) is carried out by turning the particular vehicle (18) around by 180 degrees, wherein a transport vehicle (18), after its positioning at one of the transfer areas (16) of a processing station (14), picks up a load (20) onto its first support area (22), is subsequently controlled such that it turns around by 180 degrees, drives up to the transfer area (16) with its second support area (22), and then picks up a further load (20) onto the second support area (22).

6. The method as recited in claim 5, in which a load (20) that is located in a first support area (22) of the transport vehicle (18) is transferred into the second support area (22) while the vehicle (18) is driving or while it is standing still.

7. The method as recited in one of the claims 5 or 6, in which a transport vehicle (18) performs a plurality of transport tasks simultaneously while driving.

## Revendications

1. Système comprenant un système de transport autoguidé (12) qui comprend des véhicules de transport autoguidés (18), et une installation de fabrication et/ou d'emballage (10) qui présente une pluralité de postes de traitement (14) ayant des zones de transfert (16), dans lequel ledit système est configuré de telle sorte que des charges (20) chacune de taille définie, telles que palettes (32) ou similaire, sont transportées entre les zones de transfert (16) au moyen de véhicules de transport (18) qui présentent chacun au moins deux zones d'appui (22) définies pour les charges (20), **caractérisé par le fait que** le système est configuré de telle sorte qu'un changement des deux zones d'appui (22) définies des véhicules de transport (18) sur une zone de transfert (16) se fait en tournant de 180 degrés le véhicule (18) respectif, dans lequel un véhicule de transport (18), après avoir été positionné sur l'une des zones de transfert (16) d'un poste de traitement (14), reçoit une charge (20) sur sa première zone d'appui (22), fait ensuite un tour de 180 degrés, fait approcher sa deuxième zone d'appui (22) de la zone de transfert (16) et, puis, reçoit une autre charge (20) sur ladite deuxième zone d'appui (22).

2. Système selon la revendication 1, dans lequel une charge (20) se trouvant dans une première zone d'appui (22) du véhicule de transport (18) peut être transférée dans la deuxième zone d'appui (22).

3. Système selon la revendication 1 ou 2, dans lequel des éléments de manipulation destinés à déplacer les charges (20) entre lesdites au moins deux zones d'appui (22) sont associés respectivement à chaque véhicule de transport (18).

4. Système selon l'une quelconque des revendications 1 à 3, dans lequel chaque poste de traitement (14) présente respectivement au moins un poste de réception de palette et de levage qui forment ladite zone de transfert (16).

5. Procédé de commande d'un système comprenant une installation de fabrication et/ou d'emballage (10) qui présente une pluralité de postes de traitement (14) ayant des zones de transfert (16), ainsi qu'un système de transport autoguidé ayant des véhicules de transport autoguidés (18), dans lequel les véhicules de transport autoguidés (18) sont commandés de telle sorte que des charges (20) chacune de taille définie, telles que palettes (32) ou similaire, sont transportées au moyen des véhicules de transport autoguidés (18), et dans lequel les véhicules de transport autoguidés (18) présentent chacun au moins deux zones d'appui (22) définies pour les charges (20), **caractérisé par le fait que** le système est commandé de telle sorte qu'un changement des deux zones d'appui (22) définies des véhicules de transport (18) sur une zone de transfert (16) se fait en tournant de 180 degrés le véhicule (18) respectif, dans lequel un véhicule de transport (18), après avoir été positionné sur l'une des zones de transfert (16) d'un poste de traitement (14), reçoit une charge (20) sur sa première zone d'appui (22), est commandé ensuite de manière à faire un tour de 180 degrés, fait approcher sa deuxième zone d'appui (22) de la zone de transfert (16) et, puis, reçoit une autre charge (20) sur ladite deuxième zone d'appui (22).

6. Procédé selon la revendication 5, dans lequel une charge (20) se trouvant dans une première zone d'appui (22) du véhicule de transport (18) est transférée dans la deuxième zone d'appui (22) durant la marche du véhicule (18) ou lors de l'arrêt de celui-ci.

7. Procédé selon l'une quelconque des revendications 5 ou 6, dans lequel un véhicule de transport (18) remplit simultanément une pluralité de tâches de transport durant une marche.
